# EUROPÄISCHE PATENTSCHRIFT

(11) **EP 1 767 264 B1**
(45) Veröffentlichungstag und Bekanntmachung des Hinweises auf die Patenterteilung: **24.04.2013**
(21) Anmeldenummer: 06017889.4
(22) Anmeldetag: 28.08.2006
(51) Int. Cl.: B01J 8/02, C01B 3/38, H01M 8/04, F23D 3/40

(54) **Reformer für eine Brennstoffzelle in einem Fahrzeug**
Reformer for a fuel cell in a vehicle
Réformeur pour une pile à combustible dans un véhicule

(30) Priorität: 21.09.2005 DE 102005045067
(43) Veröffentlichungstag der Anmeldung: 28.03.2007
(73) Patentinhaber: Eberspächer Climate Control Systems GmbH & Co. KG., 73730 Esslingen (DE)
(72) Erfinder: Eberspach, Günter, 72649 Wolfschlugen (DE)
(74) Vertreter: Ruttensperger, Bernhard

(56) Entgegenhaltungen:
- EP-A2- 1 354 852
- DE-A1- 10 120 027
- DE-B3-102004 020 129
- GB-A- 185 476

## Beschreibung

Die vorliegende Erfindung betrifft einen Reformer zur Bereitstellung von Wasserstoff, insbesondere für eine Brennstoffzelle in einem Fahrzeug.

Eine Bauart derartiger Reformer ist mit einer Verdampferanordnung ausgestaltet, die dazu dient, Kohlenwasserstoff zu verdampfen und mit einem Mischmaterial zu vermischen. Dieses Gemisch aus Kohlenwasserstoffdampf und Mischmaterial, beispielsweise Luft, kann dann zu einer Katalysatoranordnung in dem Reformer geleitet werden, um dort in einer katalytischen Reaktion zu einem molekularen Wasserstoff enthaltenden Gasgemisch umgesetzt zu werden. Um den flüssigen Kohlenwasserstoff, also beispielsweise Benzin oder Dieseskraftstoff, zu verdampfen, kann ein diesen flüssigen Kohlenwasserstoff aufnehmendes poröses Verdampfermedium vorgesehen sein, das auf Grund seiner Porosität und einer darin vorhandenen Kapillarförderwirkung den flüssigen Kohlenwasserstoff in seinem Innenvolumenbereich verteilt und über eine vergleichsweise große Oberfläche in eine Verdampferkammer abgeben kann, in welcher dann eine Durchmischung mit dem Mischmaterial auftreten kann. Da zum Starten der katalytischen Reaktion in dem Reformer das Katalysatormaterial auf eine geeignete Temperatur gebracht werden muss, kann in einer Startphase das in der Verdampferanordnung bereitgestellte Gemisch aus Kohlenwasserstoffdampf und Mischmaterial zunächst gezündet und verbrannt werden, so dass die dabei entstehenden heißen Verbrennungsabgase nicht nur den Bereich der Verdampferanordnung vorwärmen, sondern auch auf Grund der Durchströmung des Katalysatormaterials dieses auf die geeignete Temperatur bringen. Ist dieser Zustand erreicht, so kann die Verbrennung beendet werden und das dann weiterhin bereitgestellte Gemisch aus Kohlenwasserstoffdampf und Mischmaterial in Richtung Katalysatormaterial zur katalytischen Umsetzung geleitet werden.

Zur Erlangung dieser verschiedenen Betriebszustände, also eines Verbrennungsbetriebszustands einerseits und eines Zustands mit Bereitstellung eines Gemisches für die katalytische Umsetzung andererseits, in jeweils optimaler Art und Weise, sollte in der Verbrennungsphase ein überstöchiometrisches Gemisch bereitgestellt werden, also ein Gemisch mit Sauerstoffüberschuss, während für den Reformerbetrieb ein unterstöchiometrisches Gemisch bereitgestellt werden sollte, also ein Gemisch mit einem Überschuss an Kohlenwasserstoff. Dies erfordert jedoch, dass für die verschiedenen Betriebszustände die zu mischenden bzw. zu verdampfenden Materialien einerseits mit einer geeigneten Förderrate zugeführt werden müssen, andererseits aber auch sichergestellt werden muss, dass eine geeignete Durchmischung dieser Materialien auftritt.

Aus der DE 10 2004 020 129 B3 ist eine Verdampferanordnung bekannt, bei welcher flüssiger Brennstoff über eine Brennstoffzuführleitung in ein poröses Verdampfermedium eingeleitet wird, das am Bodenbereich einer topfartigen Mischkammer vorgesehen ist. Durch ein in die Mischkammer ebenfalls hinein ragendes Zündorgan kann ein in der Mischkammer gebildetes Brennstoff/Luft-Gemisch gezündet und somit zur Verbrennung gebracht werden.

Es ist die Aufgabe der vorliegenden Erfindung, einen Reformer zur Bereitstellung von Wasserstoff, insbesondere für eine Brennstoffzelle in einem Fahrzeug, vorzusehen, mit welchem ein verbessertes Betriebsverhalten erreichbar ist.

Erfindungsgemäß wird diese Aufgabe gelöst durch einen Reformer zur Bereitstellung von Wasserstoff, insbesondere für eine Brennstoffzelle in einem Fahrzeug, gemäß Anspruch 1. Diese umfasst eine Verdampferanordnung zur Erzeugung eines Kohlenwasserstoffdampf/Mischmaterial-Gemisches, wobei die Verdampferanordnung ein Verdampfergehäuse mit einer Bodenwandung und einer Umfangswandung umfasst, welche eine Verdampferkammer umgeben, wobei in dem Verdampfergehäuse flüssigen Kohlenwasserstoff von einer Zuführleitungsanordnung aufnehmendes poröses Verdampfermedium vorgesehen ist, welches wenigstens einen Bereich der Umfangswandung bedeckt.

Bei dem erfindungsgemäßen Reformer ist in der Verdampferanordnung poröses Verdampfermedium so angeordnet, dass es wenigstens einen Teil der Umfangswandung bedeckt. Dies bedeutet, dass bei vergleichsweise großer Verdampfungsoberfläche des porösen Verdampfermediums, verglichen mit einer Anordnung, bei der beispielsweise nur die Bodenwandung mit derartigem Verdampfermedium bedeckt ist, das Volumen bzw. die Abmessung der Verdampferkammer verringert werden. D.h., die zu mischenden Materialien, also der verdampfte Kohlenwasserstoff und das Mischmaterial, werden in einen kleineren Volumenbereich eingespeist, was zu einer deutlich gleichmäßigeren Durchmischung führt, und zwar unabhängig davon, welches Mischungsverhältnis, überstöchiometrisch oder unterstöchiometrisch, erforderlich ist.

Um das für die Gemischbildung erforderliche Mischmaterial bereitstellen zu können, ist an der Umfangswandung eine erste Mischmaterialeinleitanordnung vorgesehen oder/und ein von der Bodenwandung ausgehend sich erstreckender Mischmaterialeinleitansatz erstreckt sich in das Verdampfergehäuse.

Wie vorangehend dargelegt, kann auf Grund der erfindungsgemäßen Ausgestaltung das Volumen der Verdampferkammer verringert werden, und somit eine gleichmäßigere Durchmischung erlangt werden. Um diese Durchmischung noch weiter verbessern zu können, schließt an die Verdampferkammer eine Mischkammer an. Weiter ist eine Mischmaterial in die Mischkammer einleitende zweite Mischmaterialeinleitanordnung vorgesehen.

Um insbesondere in der Startphase bei allgemein kaltem System die Abdampfung von Kohlenwasserstoff unterstützen zu können, wird vorgeschlagen, dass eine erste elektrisch erregbare Heizeinrichtung vorgesehen ist, durch welche wenigstens ein Teil des die Umfangswandung bedeckenden porösen Verdampfermediums erwärmbar ist. Dabei muss diese elektrisch erregbare Heizeinrichtung nicht notwendigerweise so ausgebildet sein, dass sie das gesamte poröse Verdampfermedium, welches die Umfangswandung bedeckt, erwärmen kann.

Bei einer weiteren Ausgestaltungsform kann vorgesehen sein, dass das poröse Verdampfermedium einen die Umfangswandung wenigstens zum Teil bedeckenden ersten Verdampfermediumbereich sowie einen die Bodenwandung wenigstens zum Teil bedeckenden zweiten Verdampfermediumbereich umfasst. In diesem Falle kann zum Bereitstellen der verstärkten Verdampfung in der Startphase vorgesehen sein, dass dem zweiten Verdampfermediumbereich eine zweite elektrisch erregbare Heizeinrichtung zur Erwärmung desselben zugeordnet ist. Auch hier wird erkennbar, dass nur ein Teil des porösen Verdampfermediums durch die elektrisch erregbare Heizeinrichtung erwärmbar ist, was jedoch auf Grund der Bereitstellung eines überstöchiometrischen Gemisches in der Startphase, also eines Gemisches mit vergleichsweise wenig Kohlenwasserstoffdampfanteil, ausreichend ist.

Dabei ist es möglich, dass die Mischkammer mit bezüglich der Verdampferkammer größerem oder sich von dieser weg erweiterndem Querschnitt ausgebildet ist.

Wie bereits vorangehend dargelegt, kann bei dem erfindungsgemäßen Reformer die Verdampferanordnung in einer Startphase dazu genutzt werden, das darin bereitgestellte Gemisch zu verbrennen und somit das Gesamtsystem des Reformers auf die geeignete Betriebstemperatur zu bringen. Um diesen Verbrennungsvorgang starten zu können, wird vorgeschlagen, dass der Verdampferkammer ein elektrisch erregbares Zündorgan zugeordnet ist zum Zünden eines in der Verdampferkammer vorhandenen Kohlenwasserstoffdampf/Mischrnaterial-Gemisches.

Das bei dem erfindungsgemäßen Reformer einsetzbare Mischmaterial kann Luft oder/und Wasserdampf oder/und Anodenabgas einer Brennstoffzelle oder/und Abgas eines einer Brennstoffzelle nachgeschalteten Restgasbrenners umfassen.

Die vorliegende Erfindung wird nachfolgend mit Bezug auf die beiliegenden Zeichnungen detailliert beschrieben. Es zeigt:
- Fig. 1: eine schematische Längsschnittdarstellung eines Reformers mit Verdampferanordnung;
- Fig. 2: eine der Fig. 1 entsprechende Ansicht einer abgewandelten Ausgestaltungsform.

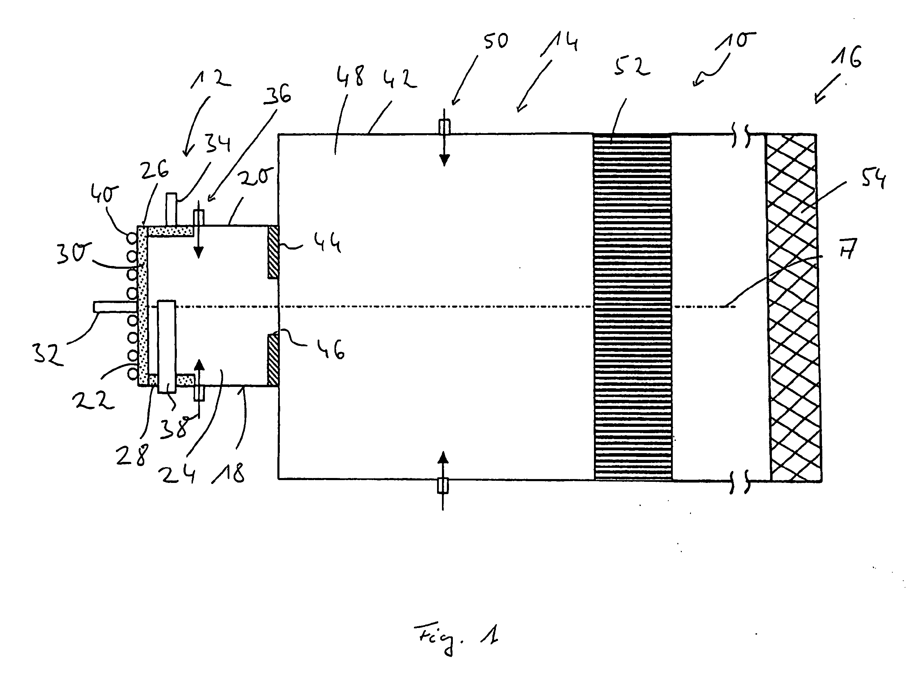

Ein erfindungsgemäß aufgebauter Reformer ist in Fig. 1 allgemein mit 10 bezeichnet. Dieser Reformer 10 dient dazu, ein reformierfähiges Gemisch aus Kohlenwasserstoffdampf und Mischmaterial, beispielsweise Luft, Wasserdampf, Anodenabgas einer Brennstoffzelle oder dergleichen, bereitzustellen und, dieses einer katalytischen Reaktion zu unterziehen. Zu diesem Zwecke weist der Reformer 10 im Wesentlichen drei Systembereiche auf. Dies ist zum einen eine nachfolgend detaillierter beschriebene Verdampferanordnung 12, eine Mischeranordnung 14 und eine Katalysatoranordnung 16. Diese drei Anordnungen 12, 14, 16 sind beispielsweise in Richtung einer Längsachse A in Strömungsrichtung aufeinander folgend angeordnet.

Die Verdampferanordnung 12 umfasst ein im Wesentlichen topfartig ausgebildetes Gehäuse 18 mit einer Umfangswandung 20 und einer Bodenwandung 22. Die Umfangswandung 20 und die Bodenwandung 22 umschließen eine Verdampferkammer 24. An der Innenseite des Verdampfergehäuses 18 ist ein allgemein mit 26 bezeichnetes Verdampfermedium vorgesehen. Dieses wiederum umfasst einen ersten Verdampfermediumbereich 28 mit im Wesentlichen ringartiger bzw. zylindrischer Struktur, der den der Bodenwandung 22 nahen Bereich der Umfangswandung 20 an deren der Verdampferkammer 24 zugewandten Innenseite bedeckt. Ein zweiter Verdampfermediumbereich 30 bedeckt die Innenseite der Bodenwandung 22, so dass die beiden Verdampfermediumbereiche 28, 30 in gegenseitigem Kontakt stehen und ebenfalls eine topfartige Gesamtstruktur bilden. Über eine die Bodenwandung 22 durchsetzende Zuführleitung 32 wird flüssiger Kohlenwasserstoff, also beispielsweise Benzin oder Dieselkraftstoff, in den zweiten Verdampfermediumbereich 30 eingespeist. Dieser flüssige Kohlenwasserstoff verteilt sich auf Grund der Kapillarförderwirkung und auch unter Schwerkrafteinfluss im Innenvolumenbereich des porösen Verdampfermediums 26, insbesondere des zweiten Verdampfermediumbereichs 30, und gelangt auch zu der der Verdampferkammer 24 zugewandten Seite desselben. Dort kann der flüssige Kohlenwasserstoff in Richtung zur Verdampferkammer 24 abdampfen. Auf Grund des angesprochenen Kontakts zwischen den beiden Verdampfermediumbereichen 28, 30 gelangt der flüssige Kohlenwasserstoff auch in den ersten Verdampfermediumbereich 28 und kann auch über dessen der Verdampferkammer 24 zugewandten Oberfläche abgedampft werden. Um eine gleichmäßigere Brennstoffverteilung und somit auch gleichmäßigere Brennstoffabdampfung zu erlangen, kann über zumindest eine weitere Zuführleitung 34 flüssiger Kohlenwasserstoff auch in den ersten Verdampfermediumbereich 28 eingeleitet werden.

Um das für den Reformiervorgang bzw. auch einen Verbrennungsvorgang erforderliche Gemisch bereitstellen zu können, ist eine allgemein mit 36 bezeichnete Zuführanordnung vorgesehen. Über diese kann beispielsweise Luft als Mischmaterial in die Verdampferkammer 24 eingeleitet werden. Diese Zuführanordnung 36 kann beispielsweise angrenzend an den ersten Verdampfermediumbereich 28 in der Umfangswandung 20 mehrere Einleitöffnungen umfassen, durch welche die unter Druck geförderte Luft im Wesentlichen radial in die Verdampferkammer 24 einströmt, wie durch Pfeile angedeutet. Diese Luft mischt sich mit dem vermittels des porösen Verdampfermediums 26 verdampften Kohlenwasserstoff und führt somit zur Bereitstellung des erforderlichen Gemisches. Es sei hier darauf hingewiesen, dass über die Zuführanordnung 34 auch anderes Mischmaterial oder zusätzlich anderes Mischmaterial, wie z.B. Wasserdampf, aus einer Brennstoffzelle abströmendes Anodenabgas oder das einen einer Brennstoffzelle nachgeschalteten Restgasbrenner verlassende Abgas eingeleitet werden kann.

Um insbesondere in der Startphase durch Verbrennung des in der Verdampferkammer 24 bereitgestellten Gemisches ausreichend hohe Temperaturen erzeugen zu können, ist ein Zündorgan 38 vorgesehen. Dieses beispielsweise als Glühzündstift ausgeführte Zündorgan 38 kann durch elektrische Erregung in seinem Bereich ausreichend hohe Temperaturen bereitstellen, um das dort vorhandene Gemisch zu zünden. Weiter kann insbesondere in der Startphase die Abdampfung von Kohlenwasserstoff durch eine dem zweiten Verdampfermediumbereich 30 zugeordnete elektrisch erregbare Heizeinrichtung 40 unterstützt werden. Diese beispielsweise in Form einer Heizwendel oder Heizspirale ausgestaltete Heizeinrichtung 40 erwärmt das poröse Verdampfermedium 26 des zweiten Verdampfermediumbereichs 30 an seiner von der Verdampferkammer 24 abgewandten Rückseite und führt somit in diesem Bereich zu einer verstärkten Brennstoffabdampfung.

In Strömungsrichtung anschließend an die Verdampferanordnung 12 bzw. das Verdampfergehäuse 18 liegt die Mischeranordnung 14. Diese umfasst beispielsweise ein Mischergehäuse 42, das im Übergang zum Verdampfergehäuse 18 eine stufenartige Querschnittserweiterung aufweist. Ferner kann in diesem Übergangsbereich am Verdampfergehäuse optional eine Blende 44 mit einer zentralen Ausströmöffnung 46 vorgesehen sein. In dem Mischergehäuse 42 ist eine Mischerkammer 48 gebildet, in welche das in der Verdampferkammer 24 generierte Gemisch einströmt. Ferner ist eine Zuführanordnung 50 vorgesehen, über welche beispielsweise von radial außen zusätzliches Mischmaterial in die Mischerkammer 48 eingeleitet werden kann und dort mit dem bereits vorhandenen Gemisch vermischt werden kann.

An ihrem stromabwärtigen Endbereich ist die Mischerkammer 48 von einer Strömungsbeeinflussungseinheit 52 begrenzt. Diese auch als Flammsperre wirksame Einrichtung kann beispielsweise einen Drallkörper umfassen, der an der stromwabwärtigen Seite zu einer Strömungshomogenisierung und somit auch einer sehr gleichmäßigen Anströmung der Katalysatoranordnung 16 sorgt. Diese weiter stromabwärts folgende Katalysatoranordnung 16 umfasst ein nur schematisch angedeutetes Katalysatormaterial 54, an dessen Oberfläche dann die bereits angesprochene Zersetzung des weiter stromaufwärts erzeugten Gemisches stattfindet und der molekulare Wasserstoff bereitgestellt wird.

Mit dem vorangehend beschriebenen Aufbau insbesondere im Bereich der Verdampferanordnung 12 verbinden sich verschiedene Vorteile. So hat das Bereitstellen eines Teils des porösen Verdampfermediums, nämlich des ersten Verdampfermediumbereichs 28, an der Innenseite der Umfangswandung 20 des Verdampfergehäuses 18 den elementaren Vorteil, dass bei vergleichsweise großer Gesamtoberfläche dieses porösen Verdampfermediums 26, welche Gesamtoberfläche abgestimmt ist auf die insbesondere im Reformerbetrieb erforderliche Abdampfungsrate, die Querschnittsabmessung des Verdampfergehäuses 18 verringert werden kann. Dies bedeutet, dass der radiale Abstand der Umfangswandung 20 zur Achse A im Vergleich zu einer alleinigen Positionierung des Verdampfermediums im Bereich der Bodenwandung verringert ist. Infolgedessen kann das von radial außen, also durch die Umfangswandung 20 einströmende Mischmaterial zur Vermischung mit dem abgedampften Kohlenwasserstoff deutlich weiter nach radial innen vordringen und insbesondere auch die radial zentralen Bereiche erreichen. Dies wiederum hat zur Folge, dass vor allem in der Startphase, also bei Arbeiten mit überstöchiometrischem Gemisch, nicht nur im Bereich der Einleitöffnungen der Zuführanordnung 36 eine ausreichende Durchmischung und Stabilisierung der Flamme vorhanden ist, sondern über den gesamten Volumenbereich der Verdampferkammer 24 hinweg.

Ferner hat der in der Fig. 1 dargestellte Aufbau mit der Bereitstellung zweier Verdampfermediumbereiche 28, 30 den Vorteil, dass beispielsweise nur dem Verdampfermediumbereich 30, also dem die Bodenwandung 22 bedeckenden Verdampfermediumbereich, eine Heizeinrichtung zugeordnet ist, die dann vor allem in der Startphase erregt wird. In dieser Phase kann dann beispielsweise eine Zufuhr von flüssigem Kohlenwasserstoff auch nur über die Leitung 32 erfolgen, so dass vor allem derjenige Bereich, der primär mit flüssigem Kohlenwasserstoff versorgt wird, auch durch die Heizeinrichtung erwärmt wird, während der insbesondere in der Startphase weniger stark mit flüssigem Kohlenwasserstoff versorgte Bereich des porösen Verdampfermediums, also der erste Verdampfermediumbereich 28, nicht geheizt werden muss, was grundsätzlich zu einem geringeren Verbrauch elektrischer Energie führt.

Auf Grund der vorangehend angesprochenen kompakteren Baugröße, bei welcher insbesondere auch das Zündorgan 38 näher an den in der Startphase mit flüssigem Kohlenwasserstoff versorgten Bereich des porösen Verdampfermediums 30 heranrückt, ist auch eine geringere thermische Masse involviert, was bedeutet, dass die Erwärmung auf die gewünschte Temperatur insbesondere auch im Bereich der Verdampferanordnung 12 schneller erreicht werden kann.

Durch die in Strömungsrichtung aufeinander folgende Staffelung der Verdampferkammer 24 einerseits und der Mischerkammer 48 andererseits mit der dazwischen liegenden Blende 44 wird weiterhin vor Anströmung der Katalysatoranordnung 16 für eine verbesserte und gleichmäßigere Durchmischung der verschiedenen involvierten Materialien gesorgt. Ferner ist es möglich, in dieser Mischerkammer 28 eine weitere Durchmischung mit zusätzlichem Mischmaterial zu erzeugen.

Die Aufgliederung in zwei Verdampfermediumbereiche 28, 30, von welchen jeder separat auch mit flüssigem Kohlenwasserstoff versorgt werden kann, führt insbesondere im Reformerbetrieb, in welchem mit unterstöchiometrischem Gemisch gearbeitet wird, zu einer deutlich gleichmäßigeren Einleitung des Kohlenwasserstoffdampfes in die Verdampferkammer 24. Weiter hat diese Aufgliederung zur Folge, dass in der Startphase das die Umfangswandung 20 überdeckende poröse Verdampfermedium des ersten Verdampfermediumbereichs 28 durch die ablaufende Verbrennung mit erwärmt wird und somit für den nachfolgenden Reformaterzeugungsvorgang optimal vorgewärmt werden kann.

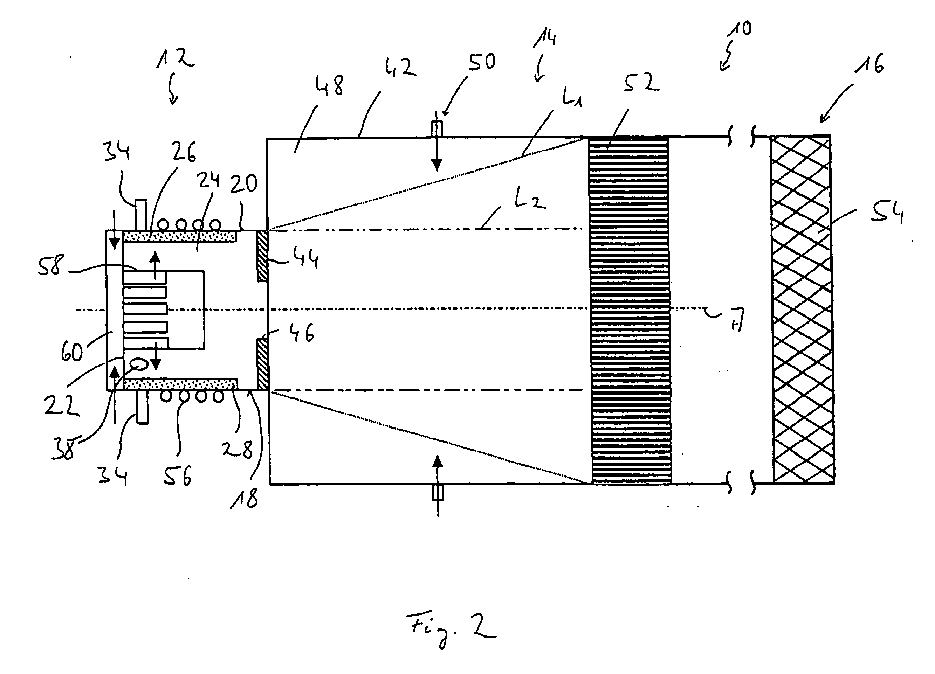

In Fig. 2 ist eine abgewandelte Ausgestaltungsform eines erfindungsgemäßen Reformers dargestellt. Dieser unterscheidet sich im Vergleich zu dem vorangehend beschriebenen Reformer 10 im Wesentlichen dadurch, dass das poröse Verdampfermedium 26 im Wesentlichen nur den ersten Verdampfermediumbereich 28, also den die Innenseite der Umfangswandung 20 bedeckenden Verdampfermediumbereich, umfasst. Dieser weist zur Bereitstellung der erforderlichen Verdampfungsoberfläche hier eine etwas größere axiale Erstreckung auf und reicht nahezu über die gesamte Axialerstreckung der Umfangswandung 20. Über die die Umfangswandung 20 durchsetzenden und über den Umfang verteilten Zuführleitungen 34 wird flüssiger Kohlenwasserstoff in dieses poröse Verdampfermedium 26 eingespeist. Ferner ist eine elektrisch erregbare Heizeinrichtung 56 vorgesehen, welche das poröse Verdampfermedium 26 an seiner von der Verdampferkammer 24 abgewandten Rückseite erwärmt und somit zu einer verbesserten Abdampfung beiträgt. Man erkennt, dass die elektrisch erregbare Heizeinrichtung 26 sich nur über einen Teil der Axialerstreckung des Verdampfermediums 26 erstreckt, so dass auch hier nur ein Teilbereich in der Startphase erwärmt wird. Das Mischmaterial, insbesondere die zur Gemischbildung eingesetzte Luft, wird über einen von der Bodenwandung 22 sich in die Verdampferkammer 24 hinein erstreckenden Ansatz 58 von radial innen her eingeleitet. Eine Zuführkanalanordnung 60 führt im Bereich der Bodenwandung 22 zu diesem Ansatz 58.

Auch diese Ausgestaltungsform nutzt den Vorteil, dass durch Anordnen des porösen Verdampfermediums 26 im Bereich der Umfangswandung 20 bei sehr kompakter Baugröße eine sehr große Verdampfungsoberfläche bereitgestellt werden kann. Dies wird kombiniert damit, dass die Luft bzw. sonstiges Mischmaterial von radial innen her zugeführt wird, so dass auch hier nur ein vergleichsweise kurzer Strömungsweg erforderlich ist und eine sehr gute Vermischung des Mischmaterials mit dem abdampfenden Kohlenwasserstoff sichergestellt werden kann.

Man erkennt in Fig. 2 weiter durch Linien L₁ und L₂ angedeutete alternative Konturen des Mischergehäuses 42. Dieses kann an Stelle der vorangehend in Fig. 1 dargestellten stufenartigen Querschnittserweiterung ausgehend von der Verdampferkammer 24 sich auch allmählich erweiternd ausgebildet sein (L₁), oder kann auch mit dem gleichen Querschnitt weitergeführt sein (L₂), wie die Verdampferkammer 24 bzw. das Verdampfergehäuse 18. Dies wird primär auch abhängen von der konstruktiven Ausgestaltung des Katalysatormaterials 54 in der Katalysatoranordnung 16. Selbstverständlich kann eine derartige abgewandelte Umfangskontur des Mischergehäuses 42 auch bei der in Fig. 1 dargestellten Ausgestaltungsform realisiert sein.

## Patentansprüche

1. Reformer zur Bereitstellung von Wasserstoff, insbesondere für eine Brennstoffzelle in einem Fahrzeug, umfassend eine Verdampferanordnung (12) zur Erzeugung eines Kohlenwasserstoffdampf/Mischmaterial-Gemisches, wobei die Verdampferanordnung (12) ein Verdampfergehäuse (18) mit einer Bodenwandung (22) und einer Umfangswandung (20) umfasst, welche eine Verdampferkammer (24) umgeben, wobei in dem Verdampfergehäuse (18) flüssigen Kohlenwasserstoff von einer Zuführleitungsanordnung (32, 34) aufnehmendes poröses Verdampfermedium (26) vorgesehen ist, welches wenigstens einen Bereich der Umfangswandung (20) bedeckt, wobei
ein von der Bodenwandung (22) ausgehend sich erstreckender Mischmaterialeinleitansatz (58) sich in das Verdampfergehäuse (18) erstreckt, und wobei
an die Verdampferkammer (24) eine Mischkammer (48) anschließt und
eine Mischmaterial in die Mischkammer (48) einleitende zweite Mischmaterialeinleitanordnung (50) vorgesehen ist.

2. Reformer nach Anspruch 1;
**dadurch gekennzeichnet, dass** eine erste elektrisch erregbare Heizeinrichtung (56) vorgesehen ist, durch welche wenigstens ein Teil des die Umfangswandung (20) bedeckenden porösen Verdampfermediums (26) erwärmbar ist.

3. Reformer nach Anspruch 1 oder 2,
**dadurch gekennzeichnet, dass** das poröse Verdampfermedium (26) einen die Umfangswandung (20) wenigstens zum Teil bedeckenden ersten Verdampfermediumbereich (28) sowie einen die Bodenwandung (22) wenigstens zum Teil bedeckenden zweiten Verdampfermediumbereich (30) umfasst.

4. Reformer nach Anspruch 3,
**dadurch gekennzeichnet, dass** dem zweiten Verdampfermediumbereich (30) eine zweite elektrisch erregbare Heizeinrichtung (40) zur Erwärmung desselben zugeordnet ist.

5. Reformer nach einem der Ansprüche 1 bis 4,
**dadurch gekennzeichnet, dass** die Mischkammer (48) mit bezüglich der Verdampferkammer (24) größerem oder sich von dieser weg erweiterndem Querschnitt ausgebildet ist.

6. Reformer nach einem der Ansprüche 1 bis 5,
**dadurch gekennzeichnet, dass** der Verdampferkammer (24) ein elektrisch erregbares Zündorgan (38) zugeordnet ist zum Zünden eines in der Verdampferkammer (24) vorhandenen Kohlenwasserstoffdampf/Mischmaterial-Gemisches.

7. Reformer nach einem der Ansprüche 1 bis 6,
**dadurch gekennzeichnet, dass** das Mischmaterial Luft oder/und Wasserdampf oder/und Anodenabgas einer Brennstoffzelle oder/und Abgas eines einer Brennstoffzelle nachgeschalteten Restgasbrenners umfasst.

## Claims

1. A reformer for providing hydrogen, in particular for a fuel cell in a vehicle, comprising an evaporator arrangement (12) for producing a hydrocarbon vapour/mixed material mixture, said evaporator arrangement (12) comprising an evaporator housing (18) with a bottom wall (22) and a circumferential wall (20), surrounding an evaporator chamber (24), a porous evaporator medium (26) absorbing liquid hydrocarbon from a feed line arrangement (32, 34) being provided in said evaporator housing (18), covering at least part of the circumferential wall (20),
a first mixed material feed arrangement (36) being provided at the circumferential wall (20), or/and
a mixed material feed connector (58) which extends from the bottom wall (22) extending into said evaporator housing (18), and
a mixing chamber (48) abutting on said evaporator chamber (24), and
a second mixed material feed arrangement (50) feeding mixed material into said mixing chamber (48) being provided.

2. The reformer according to claim 1,
**characterized by** a first electrically excitable heating device (56) being provided, whereby at least a part of the porous evaporator medium (26) covering the circumferential wall (20) can be heated.

3. The reformer according to claim 1 or 2,
**characterized by** the porous evaporator medium (26) comprising a first evaporator medium section (28) covering the circumferential wall (20) at least partly and a second evaporator medium section (30) covering the bottom wall (22) at least partly.

4. The reformer according to claim 3,
**characterized by** a second electrically excitable heating device (40) being associated to the second evaporator medium section (30) for heating the latter.

5. The reformer according to one of the claims 1 to 4,
**characterized by** the mixing chamber (48) being formed with a bigger cross section in relation to the evaporator chamber (24) or with a flaring cross section departing from the latter.

6. The reformer according to one of the claims 1 to 5,
**characterized by** an electrically excitable ignition member (38) being associated to said evaporator chamber (24) for igniting a hydrocarbon vapour/mixed material mixture provided in said evaporator chamber (24).

7. The reformer according to one of the claims 1 to 6,
**characterized by** the mixed material being air or/and water vapour or/and anode off-gas of a fuel cell or/and exhaust gas of a residual gas burner downstream from a fuel cell.

## Revendications

1. Un réformateur pour prévoir de l'hydrogène, en particulier pour une pile à combustible dans un véhicule, comprenant un arrangement d'évaporateur (12) pour produire un mélange vapeur d'hydrocarbure/mélange de matériel, l'arrangement d'évaporateur (12) comprenant un boîtier d'évaporateur (18) avec un paroi de fond (22) et un paroi circonférentiel (20) entourant une chambre d'évaporateur (24), un médium d'évaporateur poreux (26) absorbant de l'hydrocarbure liquide d'un arrangement d'alimentation (32, 34) étant prévu dans le boîtier d'évaporateur (18) et couvrant au moins une partie du paroi circonférentiel (20),
un premier arrangement d'alimentation de mélange de matériel (36) étant prévu au paroi circonférentiel (20), ou/et
un connecteur d'alimentation de mélange de matériel (58) s'étendant du paroi de fond (22) dans le boîtier d'évaporateur (18), et
une chambre de mélange (48) se raccordant à la chambre d'évaporateur (24), et
un deuxième arrangement d'alimentation de mélange de matériel (50) introduisant un mélange de matériel dans la chambre de mélange (48) étant prévu.

2. Le réformateur selon la revendication 1,
**caractérisé par** un premier dispositif de chauffage (56) électriquement excitable étant prévu, par lequel au moins une partie du médium d'évaporateur poreux (26) couvrant le paroi circonférentiel (20) peut être chauffée.

3. Le réformateur selon la revendication 1 ou 2,
**caractérisé par** le médium d'évaporateur poreux (26) comprenant une première section de médium d'évaporateur (28) couvrant au moins partiellement le paroi circonférentiel (20) ainsi qu'une deuxième section de médium d'évaporateur (30) couvrant au moins partiellement le paroi de fond (22).

4. Le réformateur selon la revendication 3,
**caractérisé par** un deuxième dispositif électriquement excitable (40) étant associé à la deuxième section de médium d'évaporateur (30).

5. Le réformateur selon une des revendications 1 à 4,
**caractérisé par** la chambre de mélange (48) étant formée avec une section transversale plus grande relatif à la chambre d'évaporateur (24) ou avec une section transversale qui s'élargit en s'éloignant de cette dernière.

6. Le réformateur selon une des revendications 1 à 5,
**caractérisé par** un membre d'allumage (38) électriquement excitable étant associé à la chambre d'évaporateur (24) pour allumer un mélange vapeur d'hydrocarbure/mélange de matériel présent dans la chambre d'évaporateur (24).

7. Le réformateur selon une des revendications 1 à 6,
**caractérisé par** le mélange de matériel comprenant de l'air ou/et de la vapeur d'eau ou/et du gaz effluent anodique d'une pile de combustible ou/et du gaz effluent d'un brûleur de gaz résiduel en aval de la pile de combustible.
